# FASCICULE DE BREVET EUROPEEN

(11) **EP 0 852 060 B1**
(45) Date de publication et mention de la délivrance du brevet: **28.01.2004**
(21) Numéro de dépôt: 96934899.4
(22) Date de dépôt: 11.10.1996
(51) Int. Cl.: H01F 7/16, F15B 13/044

(54) **ACTIONNEUR LINEAIRE ELECTROMAGNETIQUE A PLATEAUX MOBILES ET REGULATEUR DE FLUIDES A VANNES PILOTEES PAR UN TEL ACTIONNEUR**
ELEKTROMAGNETISCHER LINEARBETÄTIGER MIT BEWEGBAREN PLATTEN UND REGLER FÜR FLÜSSIGKEITEN MIT VENTILEN GESTEUERT DURCH EINEN SOLCHEN BETÄTIGER
ELECTROMAGNETIC LINEAR ACTUATOR HAVING MOVABLE PLATES AND A FLUID FLOW CONTROLLER WITH VALVES CONTROLLED BY SAID ACTUATOR

(30) Priorité: 12.10.1995 FR 9511976
(43) Date de publication de la demande: 08.07.1998
(73) Titulaire: European Aeronautic Defence and Space Company - EADS France, 75016 Paris (FR)
(72) Inventeur: FONTAINE, Laurent, F-78840 Verneuil-sur-Seine (FR); TALLEND, Claude, F-78200 Boinvilliers (FR); FRERE, Jean-Yves, F-75011 Paris (FR)
(74) Mandataire: Poulin, Gérard
(86) Numéro de dépôt international: PCT/FR1996/001593
(87) Numéro de publication internationale: WO 1997/014160

(56) Documents cités:
- EP-A- 0 499 477
- DE-A- 1 956 721
- DE-A- 4 023 828
- FR-A- 2 095 940
- US-A- 4 994 776
- PATENT ABSTRACTS OF JAPAN vol. 009, no. 004 (E-288), 10 Janvier 1985 & JP,A,59 154006 (MATSUSHITA DENKO KK), 3 Septembre 1984,

## Description

### Domaine technique

L'invention concerne principalement un actionneur linéaire électromagnétique conçu pour commander un déplacement de faible amplitude.

Un tel actionneur peut être utilisé dans de nombreux domaines, dès lors que l'on désire pouvoir commander un déplacement linéaire de faible amplitude. Il trouve une application privilégiée dans les domaines, tels que les industries aéronautiques et spatiales, dans lesquels il est essentiel de réduire la masse et l'encombrement des actionneurs.

L'invention concerne également un régulateur de fluides dont au moins une vanne est pilotée par un actionneur conforme à l'invention, en vue notamment d'assurer l'alimentation en ergols des moteurs d'un satellite.

### Etat de la technique

Les actionneurs électromagnétiques existants comprennent un ensemble fixe, de forme annulaire, principalement constitué par des moyens de commande électromagnétiques. L'actionnement de ces moyens de commande électromagnétiques crée un flux magnétique qui commande le déplacement linéaire d'un noyau magnétique constitué par une tige cylindrique logée à coulissement à l'intérieur de l'ensemble fixe.

Ces actionneurs linéaires existants peuvent être divisés en deux groupes de structures différentes, selon qu'ils sont de type monostable ou de type bistable.

Dans les actionneurs linéaires monostables, les moyens de commande électromagnétiques sont constitués uniquement par une bobine d'excitation. L'alimentation électrique de cette bobine commande le déplacement du noyau mobile dans une direction déterminée par le sens du courant passant dans la bobine. Le déplacement du noyau en sens opposé, déterminant l'état de repos de l'actionneur, est assuré selon le cas soit par gravité, soit par un ressort incorporé à l'actionneur, soit par des moyens de rappel incorporés au dispositif commandé par l'actionneur.

Dans les actionneurs linéaires bistables, les moyens de commande électromagnétiques comprennent au moins une bobine d'excitation et au moins un aimant permanent. L'alimentation électrique de la ou des bobines détermine le déplacement du noyau mobile dans l'un ou l'autre sens, suivant le sens du courant, sans qu'il soit nécessaire d'avoir recours à un moyen de rappel.

Qu'ils soient de type monostable ou bistable, les actionneurs linéaires électromagnétiques à noyau mobile présentent un encombrement et, par conséquent, une masse relativement importante lorsqu'on désire créer un flux magnétique élevé.

Par ailleurs, l'utilisation d'un noyau mobile nécessite de réaliser les surfaces des pièces qui sont en contact de frottement les unes avec les autres dans des matériaux perméables au flux magnétique. Par conséquent, le choix de ces matériaux est très limité, et généralement mal adapté à un tel contact de frottement.

En outre, les actionneurs linéaires à noyau mobile sont habituellement fabriqués de façon totalement séparée, au moyen de pièces différentes, selon qu'ils sont de type monostable ou de type bistable, ce qui tend à accroître leur coût de fabrication.

On connaît du document FR-A-2 095 940 un actionneur linéaire électromagnétique bistable comprenant un ensemble fixe incluant deux bobines disposées sur un noyau tubulaire magnétique, de part et d'autre d'une collerette réalisée d'un seul tenant avec le noyau, et un manchon extérieur magnétique entourant les bobines. L'actionneur comprend également un ensemble mobile formé d'une tige montée coulissante dans le noyau et de deux plateaux montés aux extrémités de la tige et portant des aimants permanents.

On connaît aussi du document US-A-4 994 776 un verrou magnétique dans lequel un ensemble fixe comprend deux pièces polaires disposées de part et d'autre d'une tige mobile et reliées l'une à l'autre par des supports servant de palier à ladite tige.

### Exposé de l'invention

L'invention a précisément pour objet un actionneur linéaire électromagnétique dont la conception originale permet de réduire son encombrement et sa masse pour un effort donné, par rapport à un actionneur traditionnel à noyau mobile.

L'invention a aussi pour objet un actionneur linéaire électromagnétique dont la conception originale permet d'accroître sa durée de vie et de réduire les échauffements par rapport aux actionneurs linéaires à noyaux mobiles, en autorisant l'utilisation de matériaux quelconques adaptés aux frottements, pour la réalisation de la tige cylindrique mobile.

L'invention a encore pour objet un actionneur linéaire électromagnétique dont la conception originale lui permet d'être à volonté de type monostable ou bistable par le simple remplacement des moyens de commande électromagnétiques, ce qui assure une réduction sensible des coûts de fabrication par rapport aux actionneurs existants.

Conformément à l'invention, ces trois objectifs sont atteints au moyen d'un actionneur linéaire électro-magnétique selon la revendication 1.

Dans une forme de réalisation préférentielle de l'invention, l'actionneur comprend un deuxième plateau magnétique placé en face d'une deuxième extrémité de l'ensemble fixe et relié au premier plateau magnétique par une tige traversant l'ensemble fixe de façon à pouvoir coulisser selon ledit axe d'une distance déterminée par la venue en appui de chacun des plateaux contre l'extrémité correspondante de l'ensemble fixe.

Les différents types de moyens de commande électromagnétiques comprennent des moyens de commande monostables et des moyens de commande bistables.

Les moyens de commande monostables comprennent alors une bobine d'excitation et les deux entretoises incluant une entretoise magnétique et une entretoise amagnétique, placées de part et d'autre de la bobine d'excitation.

De façon comparable, les moyens de commande bistable comprennent un aimant permanent interposé entre deux bobines, les deux entretoises étant amagnétiques et placées de part et d'autre des bobines.

Dans la forme de réalisation préférentielle de l'invention, la cuirasse extérieure magnétique et le noyau intérieur magnétique sont reliés par des organes de fixation qui traversent simultanément la cuirasse extérieure magnétique, les entretoises et le noyau intérieur magnétique.

L'invention a aussi pour objet une application privilégiée d'un tel actionneur au pilotage d'au moins une vanne, dans un régulateur de fluides tel qu'un régulateur assurant l'alimentation en ergols des moteurs d'un satellite.

Selon cette application, il est proposé un régulateur de fluides comprenant au moins une vanne pilotée par un actionneur conforme à l'invention, caractérisé par le fait que la vanne comprend :
- un siège de vanne formé dans un passage traversant un corps fixe, ce siège étant centré sur un deuxième axe parallèle à l'axe de l'ensemble fixe de l'actionneur ;
- un levier d'actionnement monté pivotant dans le corps fixe, autour d'un troisième axe orthogonal au deuxième axe, ce levier étant orienté selon une direction sensiblement perpendiculaire à l'axe de l'ensemble fixe de l'actionneur et aux deuxième et troisième axes ;
- un clapet fixé à une première extrémité du levier d'actionnement, de façon à pouvoir venir en appui étanche sur le siège de vanne dans une position de l'actionneur ;
- un soufflet d'étanchéité disposé autour du levier d'actionnement, relié à ce levier par une première extrémité et relié au corps fixe par une extrémité opposée.

Dans une première forme de réalisation, le siège de vanne est plan et le clapet fixé à la première extrémité du levier d'actionnement par des moyens de réglage d'orientation.

Dans une deuxième forme de réalisation, le siège de vanne est tronconique et le clapet sphérique.

Le régulateur de fluides précité comprend avantageusement au moins une première vanne pilotée par un premier actionneur, incluant des moyens de commande électromagnétiques bistables, et au moins une deuxième vanne pilotée par un deuxième actionneur incluant des moyens de commande électromagnétiques monostables, la première et la deuxième vannes étant prévues pour être placées dans cet ordre dans un circuit d'alimentation en fluides.

Lorsque deux fluides doivent être régulés simultanément, par exemple pour amener deux ergols différents dans un moteur de satellite, le régulateur comprend deux premières vannes pilotées simultanément par le premier actionneur et deux deuxièmes vannes pilotées simultanément par le deuxième actionneur, les premières et deuxièmes vannes étant prévues pour être placées dans cet ordre dans deux circuits parallèles d'alimentation en fluides.

### Brève description des dessins

On décrira à présent, à titre d'exemples non limitatifs, deux formes de réalisation préfentielles de l'invention, en se référant aux dessins annexés, dans lesquels :
- la figure 1 est une vue en coupe longitudinale partielle qui représente un actionneur linéaire électromagnétique monostable conforme à l'invention, cet actionneur étant illustré dans son état de repos sur la partie supérieure de la figure et dans son état d'actionnement sur la partie inférieure de la figure ;
- la figure 2 est une vue comparable à la figure 1 représentant un actionneur linéaire électromagnétique bistable conforme à l'invention, dans un premier de ses deux états stables ;
- la figure 3 représente l'actionneur de la figure 2, au moment où un changement d'état est commandé ;
- la figure 4 représente l'actionneur de la figure 2 dans son deuxième état stable ; et
- la figure 5 est une vue en coupe partielle qui illustre une application des actionneurs des figures 1 à 4 au pilotage des vannes d'un régulateur de fluides.

### Exposé détaillé de modes de réalisation

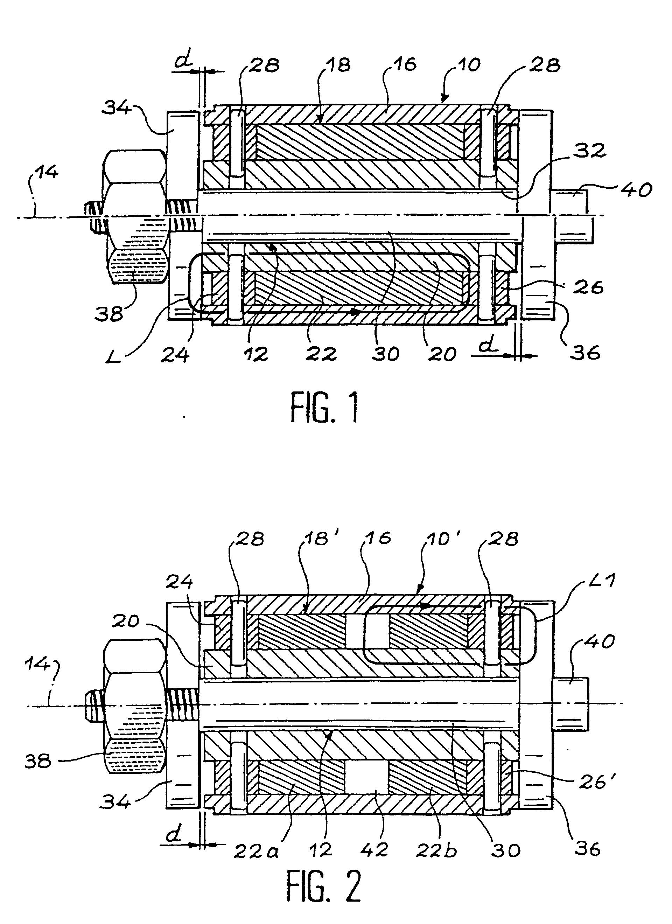

Sur la figure 1 , on a représenté un actionneur linéaire électromagnétique monostable conforme à l'invention. Cet actionneur comprend un ensemble fixe, désigné de façon générale par la référence 10, ainsi qu'un ensemble mobile, désigné de façon générale par la référence 12.

L'ensemble fixe 10 présente une forme annulaire autour d'un axe 14. Il comprend, en allant de l'extérieur vers l'intérieur, une cuirasse extérieure magnétique 16, des moyens de commande électro-magnétiques 18 et un noyau intérieur magnétique 20.

Dans la forme de réalisation de la figure 1, qui concerne un actionneur monostable, les moyens de commande électromagnétiques 18 comprennent essentiellement une bobine d'excitation 22. De part et d'autre de cette bobine d'excitation 22, des entretoises 24 et 26 sont interposées entre la cuirasse extérieure magnétique 16 et le noyau intérieur magnétique 20.

De préférence, l'une 24 des entretoises est réalisée en un matériau amagnétique alors que l'autre entretoise 26 est réalisée en un matériau magnétique. En variante, les deux entretoises 24 et 26 peuvent toutefois être réalisées en un matériau amagnétique.

Les entretoises 24 et 26 servent à relier mécaniquement le noyau intérieur magnétique 20 et la cuirasse extérieure magnétique 16. Plus précisément, le noyau 20 et la cuirasse 16 sont assemblés au travers des entretoises 24 et 26 par des moyens de fixation constitués, dans la forme de réalisation représentée, par des pions de fixation 28 qui sont emmanchés à force dans des trous traversant à la fois le noyau 20, les entretoises 24 et 26 et la cuirasse extérieure 16. En variante, les pions de fixation 28 peuvent être remplacés par tous autres organes de fixation aisément démontables tels que des vis.

L'ensemble mobile 12 de l'actionneur linéaire électromagnétique monostable illustré sur la figure 1 comprend une tige cylindrique 30 apte à coulisser selon l'axe 14 dans un alésage 32 traversant le noyau intérieur magnétique 20 de l'ensemble fixe 10.

L'ensemble mobile 12 comprend de plus deux plateaux magnétiques 34 et 36 qui sont fixés sur la tige cylindrique 30 de part et d'autre de l'ensemble fixe 10, de façon à se trouver en face de chacune des extrémités de cet ensemble. Plus précisément, le diamètre de chacun des plateaux magnétiques 34 et 36 est sensiblement égal au diamètre extérieur présenté par la cuirasse 16, dans les parties terminales de celle-ci.

Le montage des plateaux magnétiques 34 et 36 sur la tige cylindrique 30 peut être réalisé de façon quelconque. Ainsi, dans la forme de réalisation illustrée sur la figure 1, le plateau magnétique 34 est monté sur une partie terminale filetée de la tige 30, entre un écrou 38, vissé sur cette partie terminale filetée et un épaulement formé sur la tige. Le plateau magnétique 36 est bloqué quant à lui contre l'extrémité opposée de la tige cylindrique 30 par un organe de fixation (non représenté) tel qu'une vis vissée axialement dans la tige 30.

En variante, le plateau magnétique 36 peut être réalisé d'un seul tenant avec la tige cylindrique 30. Toutefois, du fait que la tige cylindrique 30 peut ne pas être réalisée en un matériau magnétique, les deux plateaux magnétiques 34 et 36 sont de préférence rapportés sur la tige 30, qui est avantageusement réalisée en un matériau différent, amagnétique, choisi pour ses bonnes caractéristiques de frottement.

Lorsque l'actionneur linéaire électromagnétique monostable illustré sur la figure 1 est au repos, c'est-à-dire lorsque la bobine d'excitation 22 n'est pas alimentée, l'ensemble mobile 12 occupe la position représentée sur la partie supérieure de la figure. Le maintien de l'actionneur dans cette position est assuré par des moyens extérieurs (non représentés) qui peuvent être constitués par la gravité si l'axe 14 est disposé sensiblement verticalement, ou par un moyen de rappel extérieur faisant partie du dispositif (non représenté) commandé par l'actionneur. Dans cette position de repos, le plateau magnétique 36 est en appui contre l'extrémité correspondante de l'ensemble fixe 10, alors que le plateau magnétique 34 est écarté de l'extrémité correspondante de l'ensemble fixe 10 d'une distance d correspondant à la course de l'actionneur.

Lorsque la bobine d'excitation 22 est mise sous tension, l'actionneur est amené dans sa position active illustrée sur la partie inférieure de la figure 1. En effet, la mise sous tension de la bobine d'excitation 22 engendre la création d'un flux magnétique dont les lignes de champ cheminent successivement dans la cuirasse extérieure magnétique 16, dans l'entretoise magnétique 26, dans le noyau intérieur magnétique 20 et dans le plateau magnétique 34 comme on l'a illustré en L sur la partie inférieure de la figure 1. L'ensemble mobile 12 est donc soumis à une force orientée selon l'axe 14 et qui tend à déplacer cet ensemble vers la droite en considérant la figure 1. Ainsi, le plateau magnétique 34 vient en appui contre l'extrémité correspondante de l'ensemble fixe 10, alors que le plateau magnétique 36 s'écarte de l'extrémité opposée de l'ensemble 10 de la distance d.

Le déplacement de l'ensemble mobile 12, correspondant au passage de l'actionneur de sa position de repos dans sa position active, se traduit normalement par une action sur le ou les dispositifs (non représentés) qu'il commande, par l'intermédiaire d'au moins un pion 40 fixé sur la face du plateau magnétique 36 tournée vers l'extérieur de l'actionneur. De préférence, le pion 40 a une longueur réglable. Ainsi, si le dispositif commandé par l'actionneur est une vanne, le pion 40 agit, directement ou non, sur le clapet de cette vanne.

Le caractère fixe du noyau intérieur magnétique 20, combiné à l'utilisation d'un ensemble mobile 12 comprenant un plateau magnétique 34 initialement écarté de l'ensemble fixe 10, permet de réaliser la tige 30, en contact de frottement avec le noyau 20, en un matériau quelconque. Ce matériau peut donc être choisi pour ses caractéristiques de frottement, ce qui permet d'augmenter la durée de vie de l'actionneur et d'en diminuer les échauffements.

Par ailleurs, le bouclage des lignes de champ L sur le plateau magnétique 34 permet, pour un encombrement donné de l'actionneur, d'engendrer un effort plus important que celui qui est créé dans un actionneur classique à noyau mobile. Cette amélioration des performances autorise une réduction de la masse et de l'encombrement des actionneurs, particulièrement appréciable dans les domaines aéronautique et spatial.

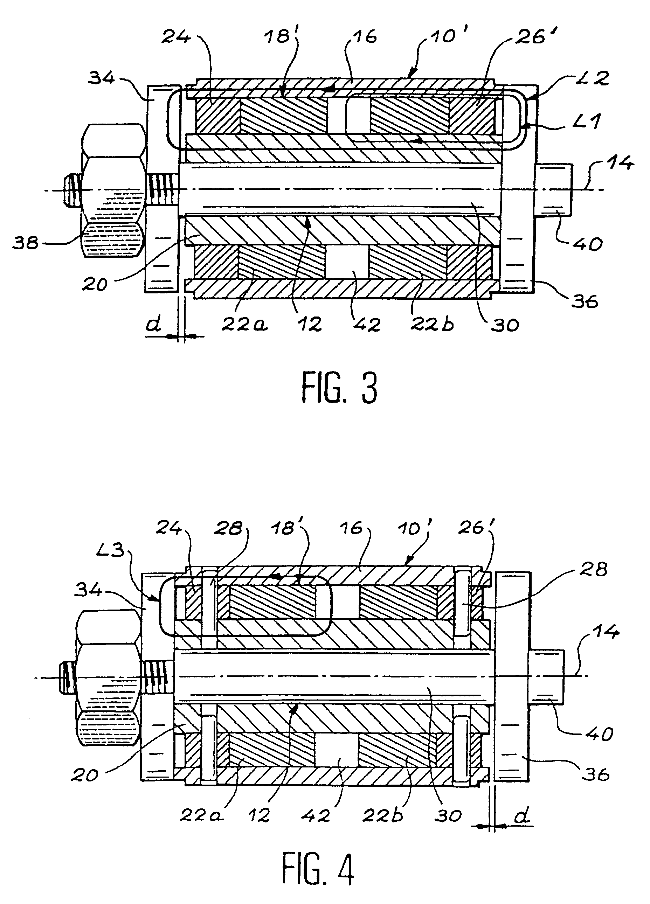

Comme on l'a illustré sur les figures 2 à 4, l'actionneur linéaire électromagnétique monostable de la figure 1 peut être aisément transformé en un actionneur linéaire électromagnétique bistable en conservant la majeure partie des pièces mécaniques qui le constituent.

Ainsi, l'ensemble fixe 10' de l'actionneur bistable illustré sur les figures 2 à 4 ne diffère de l'ensemble fixe 10 de l'actionneur monostable de la figure 1 que par les moyens de commande électro-magnétiques 18' qui sont interposés entre la cuirasse extérieure magnétique 16 et le noyau intérieur magnétique 20. Par ailleurs, l'ensemble mobile 12 reste inchangé, c'est-à-dire qu'il comprend principalement une tige cylindrique 30 portant des plateaux magnétiques 34 et 36 en vis-à-vis de chacune des extrémités de l'ensemble fixe 10'.

Dans la forme de réalisation illustrée sur les figures 2 à 4, les moyens de commande électromagnétiques 18' comprennent deux bobines d'excitation 22a et 22b logées entre la cuirasse 16 et le noyau 20, et décalées l'une par rapport à l'autre dans le sens de l'axe 14. Les bobines d'excitation 22a et 22b sont prévues pour être alimentées électriquement en sens inverse. Les moyens de commande 18' comprennent aussi un aimant permanent 42 d'aimantation radiale, placé entre ces deux bobines 22a et 22b. De plus, les entretoises 24 et 26', qui sont placées entre la cuirasse 16 et le noyau 20 de part et d'autre des bobines 22a et 22b, sont toutes deux amagnétiques.

Comme dans le cas de l'actionneur monostable illustré sur la figure 1, l'assemblage de la cuirasse extérieure magnétique 16 et du noyau intérieur magnétique 20 est assuré par des pions de fixation 28 qui traversent des trous formés dans la cuirasse 16, les entretoises 24, 26' et le noyau 20.

Sur la partie figure 2, l'actionneur linéaire électromagnétique bistable est représenté dans un premier état stable analogue à la position de repos de l'actionneur monostable décrit précédemment en se référant à la figure 1. Toutefois, au lieu d'être obtenu par une action extérieure, cet état stable est obtenu naturellement par le flux créé par l'aimant 42.

Comme on l'a illustré en L1 sur la partie supérieure de la figure 2, l'aimant engendre ainsi un flux magnétique dont les lignes de flux traversent successivement la cuirasse extérieure magnétique 16, le plateau magnétique 36 et le noyau intérieur magnétique 20. Le plateau 36 est ainsi plaqué contre l'extrémité correspondante de l'ensemble fixe 10', de telle sorte que l'autre plateau 34 se trouve écarté de la deuxième extrémité de l'ensemble fixe 10' de la distance d.

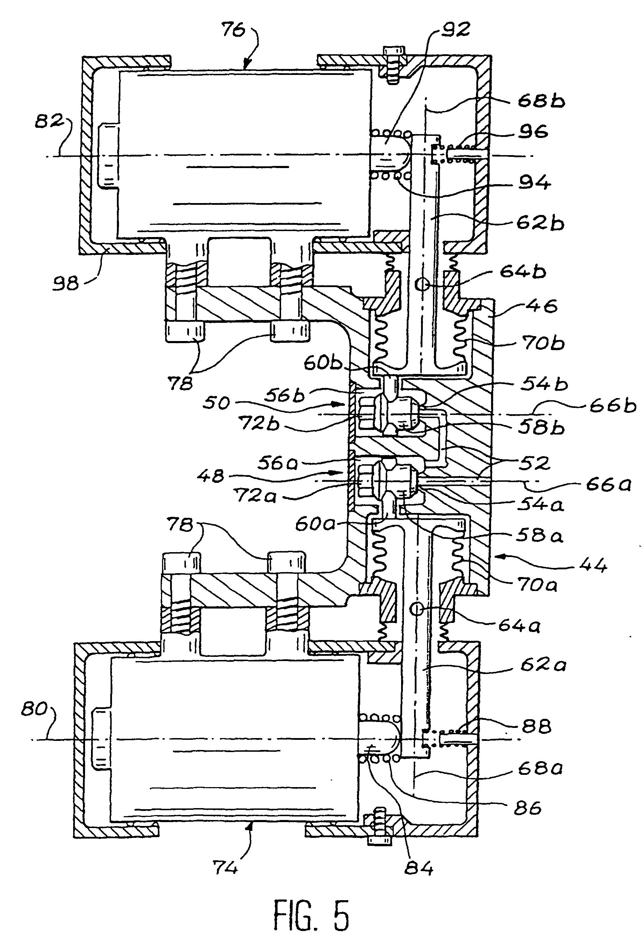

Le passage de l'actionneur dans son deuxième état stable, illustré sur la figure 4, est obtenu en alimentant électriquement une des bobines d'excitation 22a et 22b, de telle façon que le flux magnétique soit orienté en sens inverse par rapport à celui créé par l'aimant permanent 42. Les lignes de flux ainsi engendrées traversent successivement la cuirasse 16, le plateau magnétique 34, le noyau 20 et le plateau magnétique 36, comme on l'a illustré en L2 sur la figure 3. De cette façon, le flux résultant présent dans l'entrefer "ensemble fixe 10' - plateau magnétique 36" est annulé et le flux présent dans l'entrefer "ensemble fixe 10' - plateau magnétique 34" engendre un effort d'attraction selon l'axe 14. Le plateau 34 est ainsi plaqué contre l'extrémité correspondante de l'ensemble fixe 10', de telle sorte que l'autre plateau 36 se trouve écarté de l'autre extrémité de cet ensemble fixe de la distance d.

La position ainsi obtenue est conservée lorsqu'on cesse d'alimenter électriquement la bobine, car le flux de l'aimant 42 traverse alors le plateau magnétique 34, comme on l'a illustré en L3 sur la partie haute de la figure 4. La deuxième position stable est ainsi obtenue.

Le retour de l'actionneur dans son premier état illustré sur la figure 2 est obtenu en alimentant électriquement la deuxième bobine 22a ou 22b de telle façon que le flux magnétique soit orienté en sens inverse par rapport à celui engendré par l'aimant permanent 42.

Qu'il soit monostable ou bistable, l'actionneur linéaire électromagnétique selon l'invention agit sur le ou les dispositifs (non représentés) dont il assure la commande par le ou les pions 40 qui apparaissent sur la droite des figures 1 à 4.

L'actionneur linéaire électromagnétique selon l'invention peut subir différentes modifications par rapport aux formes de réalisation décrites, sans sortir du cadre de l'invention.

Ainsi, dans le cas de l'actionneur monostable décrit en se référant à la figure 1, le plateau magnétique 36 peut être supprimé et remplacé par une butée de nature quelconque limitant l'écartement entre le plateau magnétique 34 et l'extrémité correspondante de l'ensemble fixe 10 à une distance d prédéterminée. De ce point de vue, on observera que la structure particulière de l'actionneur impose de limiter cette distance d à une valeur relativement faible.

Dans le cas de l'actionneur bistable décrit en se référant aux figures 2 à 4, une des deux bobines d'excitation peut être supprimée. Le passage d'un état stable à l'autre est alors réalisé au moyen d'une seule bobine que l'on met sous tension avec des polarités différentes suivant la position stable recherchée.

Sur la figure 5, on a représenté une application des actionneurs monostable et bistable qui viennent d'être décrits en se référant aux figures 1 à 4, au pilotage des vannes d'un régulateur de fluides, conçu notamment pour être placé dans deux circuits parallèles permettant d'alimenter en ergols un moteur de satellite (non représenté), à partir de deux réservoirs (non représentés) d'ergols sous pression.

Le régulateur, désigné de façon générale par la référence 44, comprend deux ensembles de vannes identiques, disposés en parallèle à l'intérieur d'un même corps 46, et dont un seul est visible sur la figure 5. Chacun de ces ensembles de vannes est prévu pour être monté dans l'un des deux circuits parallèles précités d'alimentation en ergols.

Chacun de ces ensembles de vannes comprend une première vanne 50 et une deuxième vanne 48, montées en série dans cet ordre, à l'intérieur d'un passage 52 qui traverse le corps 46. Les deux extrémités de chaque passage 52 sont équipées de raccords (non représentés) qui permettent de monter le régulateur dans les deux circuits de fluide cités plus haut.

Les vannes 48 et 50 sont identiques. Seule l'une des deuxièmes vannes 48 va à présent être décrite, au moyen de références numériques affectées de la lettre a. Cette description s'applique également aux premières vannes 50, en remplaçant la lettre a par la lettre b.

Chacune des deuxièmes vannes 48 comprend un siège de vanne 54a formé dans le passage 52 et au centre duquel débouche une section amont de ce passage. Au-delà du siège 54a, le passage 52 s'élargit pour former une chambre 56a, dans laquelle est logé un clapet 58a de la vanne 48 correspondante.

Le clapet 58a de chacune des vannes 48 est fixé sur une tige 60a qui forme l'extrémité d'un levier d'actionnement 62a, articulé dans le corps 46 du régulateur, par un axe de pivotement 64a. Plus précisément, si on désigne par la référence numérique 66a l'axe du siège de vanne 54a, les axes 64a et 66a sont orthogonaux entre eux et, l'un et l'autre, sensiblement perpendiculaires à l'axe longitudinal 68a du levier 62a.

Dans l'agencement proposé sur la figure 5, dans lequel les axes 66a et 66b des sièges des vannes 48 et 50 sont parallèles entre eux, de même que les axes de pivotement 64a et 64b des leviers 62a et 62b, les axes longitudinaux 68a et 68b des deux leviers 62a et 62b d'un même ensemble de vannes du régulateur sont confondus, lorsque les deux vannes sont fermées.

La tige 60a portant le clapet 58a fait saillie sur une partie en forme de disque du levier d'actionnement 62a, parallèlement à l'axe longitudinal 66a de ce levier, en traversant avec un certain jeu une cloison délimitant la chambre 56a. Une première extrémité d'un soufflet d'étanchéité métallique 70a est fixée de façon étanche sur ladite partie en forme de disque du levier 62a, et entoure une partie adjacente de ce levier. La deuxième extrémité du soufflet 70a est fixée sur une partie démontable du corps 46, portant l'axe de pivotement 64a.

L'agencement qui vient d'être décrit assure l'étanchéité de la chambre 56a vis-à-vis de l'extérieur du régulateur 44, sans que les efforts nécessaires pour assurer l'étanchéité de la vanne 48 ne soient perturbés par les efforts de pression exercées par le soufflet 70a. On améliore ainsi le temps de réponse, tout en réduisant la consommation électrique et la masse.

Par ailleurs, l'utilisation d'un clapet 58a fixé à l'extrémité du levier 62a qui en assure l'actionnement permet d'augmenter la durée de vie en évitant toute usure par frottement à cet endroit. La fiabilité de l'étanchéité est également accrue, du fait qu'aucune particule liée à une usure par frottement ne risque de venir se placer entre le clapet 58a et son siège 54a.

La rigidité de la liaison entre le clapet 58a et son levier d'actionnement 62a pourrait conduire à empêcher l'obtention d'une fermeture étanche de la vanne 48, si des tolérances de position sévères n'étaient pas respectées.

Afin de supprimer cette contrainte, la fixation du clapet 58a sur la tige 60a est assurée par des moyens de réglage d'orientation 72a, lorsque le clapet 58a et le siège 54a viennent en appui l'un contre l'autre par des surfaces planes, comme on l'a illustré sur la figure 5. Les moyens de réglage d'orientation 72a comprennent, par exemple, une surface sphérique formée sur la tige 60a, emprisonnée entre deux surfaces coniques liées au clapet, et une vis ou un écrou de blocage.

En variante, ces moyens de réglage d'orientation peuvent être supprimés en remplaçant le clapet 58a par une bille et en donnant au siège de vanne 54a une forme tronconique.

Au-delà de leurs axes de pivotement 64a et 64b, les leviers d'actionnement 62a et 62b se prolongent à l'extérieur du corps 46 du régulateur 44, de façon à pouvoir être actionnés, respectivement, par des actionneurs 74 et 76.

De façon plus précise, un actionneur unique 76 agit sur les deux leviers 62b pour piloter simultanément les deux premières vannes 50, et un actionneur unique 74 agit sur les deux leviers 62a pour piloter simultanément les deux deuxièmes vannes 48.

L'actionneur 76 est un actionneur bistable conforme à celui qui a été décrit précédemment en se référant aux figures 2 à 4. Il permet de commander l'ouverture des premières vannes 50 pendant toute la période d'alimentation d'un moteur. Il constitue en outre une sécurité permettant de refermer les circuits d'alimentation en cas de blocage des deuxièmes vannes 48 en position ouverte.

L'actionneur 74 est un actionneur monostable conforme à celui qui a été décrit précédemment en se référant à la figure 1. Il permet de commander un battement contrôlé des deuxièmes vannes 48 lorsque l'alimentation en ergols du moteur correspondant est désirée.

La cuirasse extérieure magnétique de chacun des actionneurs 74 et 76 est fixée par des vis 78 sur une patte correspondante du corps 46 du régulateur 44. Cette fixation est telle que les axes respectifs 80 et 82 des ensembles fixes des actionneurs 74 et 76 soient parallèles entre eux, ainsi qu'aux axes 66a, 66b des sièges des vannes 48 et 50, et orientés selon une direction orthogonale par rapport aux axes longitudinaux 68a, 68b des leviers d'actionnement 62a, 62b.

Plus précisément, l'actionneur 74 agit simultanément sur les extrémités des deux leviers 62a par deux pions 84, de préférence de longueur réglable. Un ressort hélicoïdal de compression 86, de faible tarage, est monté sur chacun des pions 84, pour maintenir normalement un faible jeu entre les pions 84 et les leviers 62a, afin d'empêcher une éventuelle transmission de vibrations.

Par conséquent, le maintien des vannes 48 en position fermée est assuré séparément par des ressorts de rappel 88 disposés entre les extrémités des leviers 62a et un boîtier 90 lié à la cuirasse extérieure magnétique de l'actionneur 74. Les ressorts de rappel 88 sont disposés selon les axes des pions 84, et à l'opposé de ceux-ci par rapport aux leviers 62a. Le tarage de ces ressorts 88 est supérieur à celui des ressorts 86.

De la même manière, l'actionneur 76 agit simultanément sur les extrémités des deux leviers 62b par deux pions 92, de préférence de longueur réglable, qui sont maintenus très légèrement écartés des leviers par des ressorts hélicoïdaux de compression 94. Des ressorts de rappel 96, prenant appui sur un boîtier 98 lié à la cuirasse extérieure magnétique de l'actionneur 76, assurent le maintien des vannes 50 en position fermée.

La figure 5 représente le dispositif dans son état de repos. Les vannes 48 et 50 sont maintenues fermées par la seule action des ressorts 88 et 96.

Lorsqu'il est nécessaire d'alimenter en ergols le moteur du satellite dont l'alimentation s'effectue au travers du dispositif de la figure 5, l'actionneur bistable 76 est amené dans son second état stable, ce qui se traduit par un déplacement des pions 92 vers la droite en considérant la figure 5. On commande ainsi l'ouverture simultanée des deux premières vannes 50, par l'intermédiaire des leviers 62b. Les vannes 50 resteront dans cet état jusqu'à ce que l'alimentation en ergols soit interrompue.

Dès que l'ouverture des premières vannes 50 a été commandée, on pilote les deuxièmes vannes 48 de façon à les faire battre de manière contrôlée, pour amener au moteur les quantités désirées d'ergols. Pour cela, on commande l'actionneur monostable 74 par des impulsions électriques de durées et d'espacements contrôlés.

Bien entendu, l'application qui vient d'être décrite en référence à la figure 5 n'est donnée qu'à titre d'exemple et ne doit pas être considérée comme limitative.

## Revendications

1. Actionneur linéaire électromagnétique, comprenant :
- un ensemble fixe (10,10'), de forme annulaire autour d'un axe (14), incluant, de l'extérieur vers l'intérieur, une cuirasse extérieure magnétique (16), des moyens de commande électromagnétiques (18,18') et un noyau intérieur magnétique (20) ; et
- un ensemble mobile (12) apte à se déplacer selon ledit axe (14) lors d'un actionnement des moyens de commande électromagnétiques (18,18'), cet ensemble mobile incluant au moins un premier plateau magnétique (34) placé en face d'une première extrémité de l'ensemble fixe (10,10') ;
**caractérisé en ce que** l'ensemble fixe comprend deux entretoises (24,26 ;24,26') interposées entre la cuirasse extérieure magnétique (16) et le noyau intérieur magnétique (20), de part et d'autre des moyens de commande électromagnétiques (18,18'), et des moyens de fixation démontables (28) reliant mécaniquement le noyau intérieur magnétique (20) et la cuirasse extérieure magnétique (16) en traversant les entretoises, de telle sorte que l'actionneur est formé de pièces mécaniques standard, aptes à être associées à des moyens de commande électromagnétiques (18,18') de différents types.

2. Actionneur selon la revendication 1, dans lequel l'ensemble mobile (12) comprend un deuxième plateau magnétique (36) placé en face d'une deuxième extrémité de l'ensemble fixe (10, 10') et relié au premier plateau magnétique (34) par une tige (30) traversant l'ensemble fixe de façon à pouvoir coulisser selon ledit axe (14) d'une distance (d) déterminée par la venue en appui de chacun des plateaux (34,36) contre l'extrémité correspondante de l'ensemble fixe (10,10').

3. Actionneur selon l'une quelconque des revendications 1 et 2, dans lequel les différents type de moyens de commande électromagnétiques comprennent des moyens de commande monostables (18) et des moyens de commande bistables (18').

4. Actionneur selon la revendication 3, dans lequel les moyens de commande monostables (18) comprennent une bobine d'excitation (22) les deux entretoises incluant une entretoise magnétique (26) et une entretoise amagnétique (24), placées de part et d'autre de la bobine d'excitation (22).

5. Actionneur selon l'une quelconque des revendications 3 et 4, dans lequel les moyens de commande bistables (18') comprennent un aimant permanent (42) interposé entre deux bobines d'excitation (22a, 22b) les deux entretoises (24, 26') étant amagnétiques et placées de part et d'autre des bobines d'excitation (22a,22b).

6. Régulateur de fluides comprenant au moins une vanne (48, 50) pilotée par un actionneur (74, 76) selon l'une quelconque des revendications précédentes, dans lequel la vanne (48, 50) comprend :
- un siège de vanne (54a, 54b) formé dans un passage (52) traversant un corps fixe (46), ce siège étant centré sur un deuxième axe (66a, 66b) parallèle à l'axe (80, 82) de l'ensemble fixe de l'actionneur ;
- un levier d'actionnement (62a, 62b) monté pivotant dans le corps fixe (46), autour d'un troisième axe (64a, 64b) orthogonal au deuxième axe (66a, 66b), ce levier étant orienté selon une direction sensiblement perpendiculaire à l'axe (80, 82) de l'ensemble fixe de l'actionneur et aux deuxième et troisième axes ;
- un clapet (58a, 58b) fixé à une première extrémité du levier d'actionnement (62a, 62b), de façon à pouvoir venir en appui étanche sur le siège de vanne (54a, 54b) dans une position de l'actionneur (74, 76) ;
- un soufflet d'étanchéité (70a, 70b) disposé autour de levier d'actionnement (62a, 62b) relié à ce levier par une première extrémité et relié au corps fixe (46) par une extrémité opposée.

7. Régulateur selon la revendication 6, dans lequel le siège de vanne (54a, 54b) est plan et le clapet (58a, 58b) fixé à la première extrémité du levier d'actionnement (62a, 62b) par des moyens de réglage d'orientation (72a, 72b).

8. Régulateur selon la revendication 6, dans lequel le siège de vanne (54a, 54b) est tronconique et le clapet (58a, 58b) sphérique.

9. Régulateur selon l'une quelconque des revendications 6 à 8, comprenant au moins une première vanne (50) pilotée par un premier actionneur (76), incluant des moyens de commande électromagnétiques bistables, et au moins une deuxième vanne (48) pilotée par un deuxième actionneur (74) incluant des moyens de commande électromagnétiques monostables, la première et la deuxième vannes (50, 48) étant prévues pour être placées dans cet ordre dans un circuit d'alimentation en fluides.

10. Régulateur selon la revendication 9, comprenant deux premières vannes (50) pilotées simultanément par le premier actionneur (76) et deux deuxièmes vannes (48) pilotées simultanément par le deuxième actionneur (74), les premières et deuxèmes vannes (50, 48) étant prévues pour être placées dans cet ordre dans deux circuits parallèles d'alimentation en fluides.

## Patentansprüche

1. Elektromagnetisches lineares Betätigungselement, umfassend:
- eine ringförmige feststehende Anordnung (10, 10') um eine Achse (14), umfassend, von außen nach innen, eine magnetische äußere Hülle (16), elektromagnetische Steuermittel (18, 18') und einen magnetischen inneren Kern (20), und
- eine bewegliche Anordnung (12), welche ausgestaltet ist, um sich bei einer Betätigung der elektromagnetischen Steuermittel (18, 18')entlang der Achse (14) zu bewegen, wobei die bewegliche Anordnung zumindest eine erste magnetische Platte (34) umfasst, welche gegenüberliegend zu einem ersten äußersten Ende der feststehenden Anordnung (10, 10') angeordnet ist,
**dadurch gekennzeichnet, dass** die feststehende Anordnung (2) zwischen der magnetischen äußeren Hülle (16) und dem magnetischen innern Kern (20) zu beiden Seiten der elektromagnetischen Steuermittel (18, 18') angeordnete Zwischenstücke und demontierbare Befestigungsmittel (28), welche mechanisch den magnetischen inneren Kern (20) und die magnetische äußere Hülle (16) miteinander verbinden, wobei sie durch die Zwischenstücke hindurchgehen, in einer Weise umfasst, dass das Betätigungselement aus mechanischen Standardteilen gebildet ist, welche geeignet sind, mit elektromagnetischen Steuermitteln (18, 18') verschiedener Typen verknüpft zu werden.

2. Betätigungselement nach Anspruch 1, bei dem die bewegliche Anordnung (12) eine zweite magnetische Platte (36) umfasst, welche gegenüberliegend zu einem zweiten äußersten Ende der feststehenden Anordnung (10, 10') angeordnet ist und mit der ersten magnetischen Platte (34) durch eine Welle (30), welche durch die feststehende Anordnung hindurchgeht, in einer Weise verbunden ist, dass die Welle entlang der Achse (14) über eine Strecke (d), welche durch das Anstoßen jeder der Platten (34, 36) gegen das jeweilige äußerste Ende der feststehenden Anordnung (10, 10') bestimmt ist, verschiebbar ist.

3. Betätigungselement nach einem der Ansprüche 1 oder 2, bei dem die verschiedenen Typen von elektromagnetischen Steuermitteln monostabile Steuermittel (18) und bistabile Steuermittel (18') umfassen.

4. Betätigungselement nach Anspruch 3, bei dem die monostabilen Steuermittel (18) eine Anregungsspule (22) umfassen, wobei die zwei Zwischenstücke ein magnetisches Zwischenstück (26) und ein nicht magnetisches Zwischenstück (24) beinhalten, welche auf beiden Seiten der Anregungsspule (22) angeordnet sind.

5. Betätigungselement nach einem der Ansprüche 3 oder 4, bei dem die bistabilen Steuermittel einen zwischen zwei Anregungsspulen (22a, 22b) angeordneten Permanentmagneten (42) umfassen, wobei die zwei Zwischenstücke (24, 26') nicht magnetisch sind und auf beiden Seiten der Anregungsspulen (22a, 22b) angeordnet sind.

6. Flüssigkeitsregler umfassend mindestens ein von einem Betätigungselement (74, 76) nach einem der vorhergehenden Ansprüche angesteuertes Ventil (48, 50), bei dem das Ventil (48, 50) umfasst:
- einen in einem durch einen feststehenden Körper (46) hindurchgehenden Gang (52) ausgebildeten Ventilsitz (54a, 54b), wobei dieser Sitz auf einer zu der Achse (80, 82) der feststehenden Anordnung des Betätigungselements parallelen zweiten Achse (66a, 66b) zentriert ist,
- einen drehbar um eine zur zweiten Achse (66a, 66b) senkrecht stehenden dritten Achse in dem feststehenden Körper (46) befestigten Betätigungshebel (62a, 62b), wobei dieser Hebel gemäß einer im Wesentlichen senkrecht zu der Achse (80, 82) der feststehenden Anordnung des Betätigungselements und zur zweiten und dritten Achse verlaufenden Richtung ausgerichtet ist,
- eine an einem ersten äußersten Ende des Betätigungshebels (62a, 62b) in einer Weise befestigte Verschlussklappe (58a, 58b), dass sie in einer Position des Betätigungselements (74, 76) in einen dichten Kontakt mit dem Ventilsitz (54a, 54b) kommen kann,
- einen um den Betätigungshebel (62a, 62b) herum angeordneten dichten Faltenbalg (70a, 70b), welcher mit einem äußersten Ende mit diesem Hebel und mit einem gegenüberliegenden äußersten Ende mit dem feststehenden Körper (46) verbunden ist.

7. Regler nach Anspruch 6, bei dem der Ventilsitz (54a, 54b) eben ist und die Verschlussklappe (58a, 58b) an dem ersten äußersten Ende des Betätigungshebels (62a, 62b) durch Ausrichtungseinstellmittel (72a, 72b) befestigt ist.

8. Regler nach Anspruch 6, bei dem der Ventilsitz (54a, 54b) kegelstumpfartig und die Verschlussklappe (58a, 58b) sphärisch ist.

9. Regler nach einem der Ansprüche 6 bis 8, umfassend mindestens ein von einem ersten Betätigungselement (76), welches bistabile elektromagnetische Steuermittel beinhaltet, angesteuertes erstes Ventil und mindestens ein von einem zweiten Betätigungselement (74), welches monostabile elektromagnetische Steuermittel beinhaltet, angesteuertes zweites Ventil, wobei das erste und das zweite Ventil (50, 48) dazu vorgesehen sind, in dieser Reihenfolge in einem Flüssigkeitsversorgungskreislauf angeordnet zu werden.

10. Regler nach Anspruch 9, umfassend zwei erste Ventile (50), welche simultan durch das erste Betätigungselement (76) angesteuert werden, und zwei zweite Ventile (48), welche simultan durch das zweite Betätigungselement (74) angesteuert werden, wobei die ersten und zweiten Ventile (50, 48) dazu vorgesehen sind, in dieser Reihenfolge in zwei parallelen Flüssigkeitsversorgungskreisen angeordnet zu werden.

## Claims

1. Electromagnetic linear actuator comprising:
- a stationary assembly (10, 10') in the shape of a ring around an axis (14), including, working from the outside inwards, a magnetic outer shell (16), electromagnetic control means (18, 18') and a magnetic inner core (20), and
- a movable assembly (12) capable of moving in the said axis (14) when the electromagnetic control means (18, 18') are activated, said movable assembly including at least one first magnetic plate (34) positioned facing a first extremity of the stationary assembly (10, 10'),
**characterized in that** the stationary assembly comprises two spacers (24, 26, 24', 26') placed between the outer magnetic shell (16) and the inner magnetic core (20) on either side of the electromagnetic control means (18, 18'), and removable fastening means (28) mechanically linking the inner magnetic core (20) and the outer magnetic shell (18) whilst traversing the spacers, in such a way that the actuator is formed by standard mechanical parts usable with different types of electromagnetic control means (18, 18').

2. Actuator according to claim 1, wherein movable assembly (12) comprises a second magnetic plate (36) positioned facing a second extremity of the stationary assembly (10, 10') and connected to the first magnetic plate (34) by a rod (30) that passes through the stationary assembly in such a way as to enable it to slide in the said axis (14) a distance (d) determined by the bearing of the plates (34, 36) on the corresponding extremity of the stationary assembly (10, 10').

3. Actuator according to claims 1 and 2, wherein the various types of electromagnetic control means comprise monostable control means (18) and bistable control means (18').

4. Actuator according to claim 3, wherein the monostable control means (18) comprise a trip coil (22), the two spacers including a magnetic spacer (26) and a non-magnetic spacer (24) disposed on either side of the trip coil (22).

5. Actuator according to claim 3 or 4, wherein the bistable control means (18') comprise a permanent magnet (42) placed between two trip coils (22a, 22b), the two spacers (24, 26') being non-magnetic and positioned on either side of the trip coils (22a, 22b).

6. Fluid regulator comprising at least one valve (48, 50) controlled by an actuator (74, 76) according to any of the preceding claims, wherein the valve (48, 50) comprises:
- a valve-seat (54a, 54b) formed in a passage (52) through a stationary body (46), said seat being centred on a second axis (66a, 66b) parallel to the axis (80, 82) of the stationary assembly of the actuator,
- an actuating lever (62a, 62b) mounted so as to pivot in the stationary body (46) around a third axis (64a, 64b) at right angles to said second axis (66a, 66b), said lever being oriented more or less at right angles to the axis (80, 82) of the stationary assembly of the actuator and the second and third axes,
- a flap (58a, 58b) fastened to a first extremity of the actuating lever (62a, 62b) so as to constitute a leaktight seal when it presses on valve-seat (54a, 54b) in one position of the actuator (74, 76),
- a leaktight bellows (70a, 70b) disposed around the actuating lever (62a, 62b), connected to said lever by a first extremely and connected to the stationary body (46) by the other extremity.

7. Regulator according to claim 6, wherein the valve-seat (54a, 54b) is planar and the flap (58a, 58b) is fastened to the first end of actuating lever (62a, 62b) by orientation adjustment means (72a, 72b).

8. Regulator according to claim 6, wherein the valve-seat (54a, 54b) is conical and the check-valve (58a, 58b) spherical.

9. Regulator according to any one of the claims 6 to 8, comprising at least one primary valve (50) controlled by a first actuator (76) including bistable electromagnetic control means and at least one secondary valve (48) controlled by a second actuator (74) including monostable electromagnetic control means, the first and second valves (50, 48) being designed to be placed in the given order in a fluid supply circuit.

10. Regulator according to claim 9, comprising two first valves (50) controlled simultaneously by the first actuator (76) and two second valves (48) controlled simultaneously by the second actuator (74), the first and second valves (50, 48) being designed to be placed in the given order in two parallel fluid supply circuits.
